Europäisches Patentamt

European Patent Office

Office européen des brevets

(11) Publication number: **0 030 479**
**B1**

(12) **EUROPEAN PATENT SPECIFICATION**

(45) Date of publication of patent specification: **16.05.84**  (51) Int. Cl.³: **H 05 B 3/34**

(21) Application number: **80304449.4**

(22) Date of filing: **10.12.80**

(54) Conductive element and process for making the same.

(30) Priority: **11.12.79 US 102621**

(43) Date of publication of application:
**17.06.81 Bulletin 81/24**

(45) Publication of the grant of the patent:
**16.05.84 Bulletin 84/20**

(84) Designated Contracting States:
**AT BE CH DE FR IT LI NL SE**

(56) References cited:
**DE-A-2 232 558**
**DE-A-2 401 203**
**DE-A-2 515 897**
**GB-A-1 243 898**
**GB-A-1 283 444**
**GB-A-1 332 395**
**GB-A-1 383 162**
**US-A-3 859 504**
**US-A-4 158 078**

(73) Proprietor: **RAYCHEM CORPORATION**
**300 Constitution Drive**
**Menlo Park California 94025 (US)**

(72) Inventor: **Brigham, Alan**
**1221 Mandarin Drive**
**Sunnyvale California 94087 (US)**

(74) Representative: **Dlugosz, Anthony Charles et al**
**Raychem Limited Patent and Legal Department**
**Faraday Road Dorcan**
**Swindon Wiltshire, SN3 5HH (GB)**

Courier Press, Leamington Spa, England.

## Description

This invention relates to electrically conductive elements.

It has been proposed to make conductive elements, especially heaters, by processes which comprise applying a dispersion of conductive particles to a substrate and then solidifying the dispersion to form a conductive layer. The substrate can be a polymeric film or a woven or non-woven fibrous material. The conductive particles, e.g. carbon black and/or graphite, can be dispersed in an aqueous or organic liquid medium. Reference may be made for example to U.S. Patents Nos. 2,803,566, 2,952,761, 2,991,257, 3,400,254, 3,876,968 and 3,900,654. These processes have a number of disadvantages, especially when using aqueous dispersions, which are preferred for reasons of economy and safety. Thus it is often difficult to obtain good adhesion of the conductive particles to the substrate, particularly when the substrate is flexible and/or is not adequately wetted by the liquid composition. Even if satisfactory adhesion can be obtained initially, it is difficult to make a product which has stable electrical properties over an extended period of use, especially when the element is subject to flexing. Commercially successful flexible heating elements have been made by impregnating a uniform asbestos mat with an aqueous dispersion of carbon particles, but the use of asbestos fibres involves potential health hazards.

U.S. Patent No. 4,158,078 describes a process for making a heating element in which a glass fibre mat is passed through a dispersion of conductive particles, dried and then laminated between protective sheets, e.g. flexible polymeric sheets.

We have now discovered that the improved conductive elements can be made by depositing a liquid composition comprising conductive particles onto a substrate comprising a support and a plurality of randomly distributed fibres which are partially embedded in the support and which protrude from the surface of the support onto which the liquid composition is deposited. The presence of the partially embedded fibres is particularly useful in improving the electrical stability of conductive elements which are subject to flexing.

In one aspect the invention provides an electrically conductive element comprising a support and a continuous electrically conductive layer which comprises randomly distributed fibres and solid electrically conductive material adherent to the fibres, characterised in that the fibres have first portions which protrude from the support and which have solid electrically conductive material adherent thereto, thus forming an electrically conductive layer, and second portions which are embedded in the support and are relatively free, preferably substantially free, of electrically conductive material adherent thereto.

In another aspect the invention provides a process for making such a conductive element by depositing a liquid composition comprising electrically conductive particles onto the protruding fibres of a substrate which comprises:

(1) a support; and

(2) randomly distributed fibres having first portions which protrude from the support and second portions which are embedded in the support,

the support and the portions of the fibres embedded therein being relatively impervious, preferably substantially impervious, to the liquid composition.

The conductive element preferably also comprises at least two electrodes for passing current through the conductive layer. Such elements are particularly useful as heaters. Other uses for the elements, which may require no electrodes or only one electrode, include their use as microwave detectors, RFI/EMI shielding, carbon electrodes for electrochemical processes, printed circuit boards, and static electricity bleeders.

The support will normally be an electrical insulator, but can be conductive. It can be flexible or rigid, but the invention is particularly useful when it is flexible, for example sufficiently flexible for the element to be bent without breaking through an angle of at least 90° around a mandrel having a diameter of 15 cm or less, e.g. 1.25 cm. A preferred support comprises a flexible continuous film of polymeric material. The film can be of uniform composition, for example a thermoplastic material which when heated softens so that fibres can be impressed into its surface. Preferably, however, the support comprises a backing, especially a continuous layer of a polymeric film-forming composition, and an adherent layer of a polymeric composition (preferably also a film-forming composition). Preferably the adherent layer has, at least when the fibres are being embedded in the support, a softening point lower than the backing so that there is no danger of the support losing its structural integrity when the adherent layer is heated so that fibres can be impressed into its surface. The adherent layer may comprise a single polymer or a mixture of polymers, for example an adhesive which can be a partially cured thermosetting resin, e.g. a B-stage polyester resin, which is fully cured after the fibres have been partially embedded in it. Alternatively, it can be a hot melt adhesive.

Suitable polymeric materials for the backing and any adherent thereto include polymers of ethylene, propylene, vinyl chloride, vinyl fluoride, vinylidene chloride, vinylidene fluoride, tetrafluoroethylene, ethylene terephthalate, ethylene sebacate, hexamethylene adipamide, epsilon-caprolactam and methyl methacrylate; polyepoxides; phenol-formaldehyde resins; rubber; ethylene-propylene rubber; ethylene-propylene-diene terpolymer rubber; and acrylonitrile-butadiene-styrene terpolymers. A preferred support is a flexible laminate of polyethylene terephthalate and polyethylene.

The support can be substantially free of all fibres, or at least of randomly distributed fibres, except of course for the embedded portions of the fibres protruding therefrom, but fibre-reinforced polymeric films can also be used as supports or components of supports. Often the support will be substantially impermeable to water.

The support can also be a woven or non-woven fibrous material. In this case the conductive mix which is applied to the substrate may penetrate the support to a limited extent. However, the protruding fibres should provide, by reason of their chemical and/or their physical properties such as size and packing density, a layer which can be distinguished from the support and which will retain a greater proportion of the conductive mix than the support. Thus if both the support and the protruding fibres consist essentially of randomly distributed fibres, and the fibres in the support are the same as the protruding fibres, the packing density of the fibres in the support should be substantially greater than the packing density of the protruding fibres.

Suitable fibres include glass fibres, which are preferred and which preferably have an average diameter of 3 to 50 microns; cotton, paper and other cellulosic fibres; and ceramic fibres. The fibres will generally be chemically different from the support. The fibres preferably consist essentially of randomly distributed fibres. Preferably a non-woven fibrous mat is partially embedded in the support, but individual fibres can be partially embedded in the support by a flocking process. When a non-woven fibrous mat is used; its thickness is usually at least 0.05 mm, preferably 0.07 to 0.6 mm, especially 0.13 to 0.25 mm.

Each of the fibres (whether applied as a non-woven or otherwise) can have a plurality of embedded portions and/or a plurality of protruding portions. Thus the protruding portions of the fibres can be in the form of loops and/or free ends. It is believed that, at least in some cases, the protruding portions of the partially embedded fibres move relative to each other when the liquid composition is applied to the layer during preparation of the element.

The conductive material is preferably applied to the protruding fibres in the form of a composition comprising conductive particles, preferably carbon black and/or graphite, dispersed in a liquid medium, preferably water, which is subsequently evaporated, preferably with the aid of heat, leaving the conductive particles adhered to the fibres. However, the invention also includes the use of liquid compositions which solidify after they have been applied, either by cooling from an elevated temperature at which the liquid composition is applied and/or by chemical reaction. The liquid compositions are preferably substantially free of reinforcing fibres. Two or more coatings of one or more liquid compositions can be applied; one coating can be, but preferably is not, dried before another coating is applied. Suitable compositions are known in the art, e.g. in US Patent No. 2,803,566.

The conductive material is preferably deposited on the fibres as a coating, e.g. of average thickness about 10 to about 200 microns, so that the conductive layer has a plurality of randomly distributed voids therein, preferably throughout its thickness. The voids can be open and/or closed cells. It is preferred that there are randomly distributed fibres throughout the thickness of the conductive layer.

When the conductive material is applied as an aqueous dispersion, and especially when the protruding fibres are glass fibres, the fibres can advantageously be washed with an aqueous solution of a cationic wetting agent before applying the dispersion. This promotes adhesion of the conductive particles to the fibres.

The liquid composition can be applied to the substrate by any suitable technique, for example by printing, which is preferred, e.g. by silk screen printing or gravure printing, or by painting or spraying. The composition can be applied uniformly or non-uniformly by printing in a predetermined pattern and/or by varying the liquid composition used in different areas. This is especially useful for heating elements. Non-uniform application of the liquid composition can be used to produce heating elements having a desired non-uniform heat output. Non-uniform printing is also useful for the production of heaters which comprise a number of heating panels, each connected to the electrodes but separate from each other, so that if a burn-out or other fault should occur, it cannot propagate along the heater. If the panels are separated only by a short distance, the heat output of the heater can be substantially uniform.

In preparing elements which also comprise an electrode, the electrode can be placed on the support before the fibres are partially embedded therein, or on top of the partially embedded fibres prior to application of the liquid composition, or on top of the conductive layer after it has been formed. A conductive adhesion can be used to bond the electrode to the conductive layer. Strip electrodes of the kind known in the art are preferred.

By appropriate selection of material, this invention can be used to produce heaters which will operate over a wide range of voltages e.g. 12 to 600 volts, preferably 110 to 220 volts, and at operating temperatures up to about 150°C and even higher. The sheet resistance of the conductive layer is preferably 10 to 150 000 ohms per electrical square, that is to say any notinal square of the sheet preferably has a resistance of 10 to 150 000 ohms.

In the novel elements, there may be a conductive layer secured to more than one surface of a support, e.g. to opposite faces of a flexible polymeric film. The elements can also be laminated to each other or to other conductive elements to create layered structures. In one preferred embodiment, the element also comprises an electrically insulating polymeric layer which is secured to the surface of the conductive layer remote from the support, preferably so that the neutral bending axis of the element passes through the conductive layer. Preferably the insulating layer comprises a backing and an adherent layer (as described above for the support), which is laminated to the element under heat and pressure so that the coated protruding fibres become embedded in the adherent layer. The adherent layer may be such that it flows to fill substantially all the voids in the conductive layer.

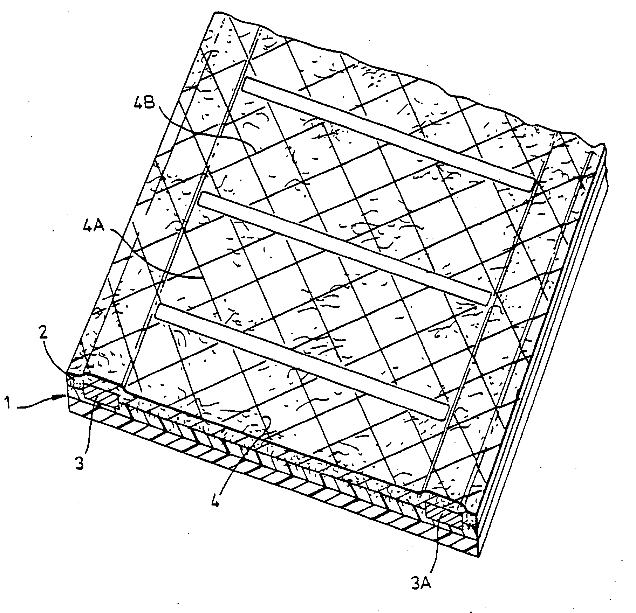

The invention is illustrated in the accompanying drawings, in which the Figure illustrates a heating element of the invention. The element comprises a flexible support, 1, which is a laminate of polyethylene terephthalate and polyethylene; a random spun web of glass fibres, 2, which is partially embedded in the polyethylene surface of the support; strip electrodes, 3 and 3a, which were placed on the polyethylene surface prior to embedding the web; and the dried residue of an aqueous conductive particle composition which was printed onto the spun web in a pattern which was continuous over the electrodes and in the form of panels, 4, 4a, 4b, over the spun web in the area between the electrodes.

The invention is further illustrated by the following Example, in which parts are by weight.

### Example

A liquid conductive composition is prepared by mixing together 50 parts of Binder A, 500 parts of Binder B and 100 parts of Conductive Mix, each prepared as described below.

### Preparation of Conductive Mix

260 parts of acetylene black, 140 parts of Vulcan® XC-72 (an oil furnace carbon black) and 1822 parts of water were mixed together and the mix was aged for at least one day.

### Preparation of Binder A

A silica dispersion was prepared by mixing together, in a high shear mixing tank, 17 parts of deionized water, 200 parts of an aqueous colloidal silica sol containing 40% silica (commercially available as Ludox HS-40), 59 parts of an acrylic latex adhesive comprising a copolymer of ethyl and butyl acrylates, (commercially available as AC-61X) and sufficient ammonium hydroxide to adjust the pH of the mixture to about 9.9; and then adding to this mixture 128 parts of deionized water containing 3 parts of dicyandiamideformaldehyde condensate (which is a cationic wetting agent commercially available as Warcofix). The dispersion was aged overnight.

Binder A was prepared by mixing 204 parts of the silica dispersion and 68 parts of bentonite clay and ageing the mix for at least 24 hours.

### Preparation of Binder B

Binder B was prepared by mixing together, in a high shear mixing tank, 200 parts of the silica sol used for Binder A, 126 parts of the acrylic adhesive used for Binder A and sufficient ammonium hydroxide to adjust the pH to about 9.9. To this mixture was added 88 parts of deionized water containing 5 parts of the wetting agent used for Binder A. The mixture was aged for 24 hours.

### Preparation of Conductive Element

Two strips of expanded nickel, 1.25 cm wide and 0.013 cm thick, were placed parallel to the edges along the length of the polyethylene surface of a flexible strip comprising a laminate of polyethylene terephthalate (0.013 cm thick) and polyethylene (0.005 cm thick). A random spun web (0.0075 cm thick) of glass fibres (having an average diameter of 3.8 microns) was placed over the polyethylene surface by application of heat and pressure. The surface was then washed to remove loose fibres using a solution of 99.8 parts deionized water, 0.1 parts of the cationic wetting agent used for Binder A and 0.1 parts of a nonionic surfactant, commercially available as Triton CF10.

The liquid conductive composition was silk screen printed onto the surface using a 200 mesh screen (sieve aperture 0.0075 cm). Two coats of the composition were applied to ensure complete coverage, the second coat being applied before the first coat had dried. The conductive composition made electrical contact with the two metal strip electrodes and extended completely over the area between the metal strips. The composition was allowed to dry and a top layer of a flexible laminate of polyethylene terephthalate and polyethylene film was laminated to the conductive composition and support.

The resulting heating element had a sheet resistance of about 500 ohms per square.

### Claims

1. An electrically conductive element comprising a support and a contiguous electrically conductive layer which comprises randomly distributed fibres and solid electrically conductive material adherent to the fibres, characterised in that the fibres have first portions which protrude from the support and which have solid electrically conductive material adherent thereto, thus forming an electrically conductive layer, and second portions which are embedded in the support and are relatively free of electrically conductive material adherent thereto.

2. An element according to Claim 1 characterised in that (i) the support is a flexible continuous film of polymeric material and (ii) the fibres are in the form of a non-woven fibrous mat which is partially embedded in the support.

3. An element according to Claim 2 characterised in that the fibrous mat is composed of glass fibres having an average diameter of 3 to 5 microns and is 0.07 to 0.6 mm thick.

4. An element according to Claim 1, 2 or 3 characterised in that (i) the support is a laminate comprising a first continuous layer of a polymeric film-forming composition and a second layer of a second polymeric composition having a lower softening point than the first polymeric composition and (ii) the fibres are partially embedded in the second layer.

5. An element according to any one of Claims 1 to 4 characterised in that (i) the support and the fibres are composed of electrically insulating material, (ii) the element further comprises an electrically insulating layer of polymeric material attached to the surface of the fibres remote from the support, and (iii) the neutral bending axis of the element passes through the conductive layer.

6. An element according to any one of Claims 1 to 5 characterised in that the conductive layer has a plurality of randomly distributed voids therein.

7. An element according to any one of Claims 1 to 6 characterised in that (i) the conductive layer has a sheet resistance of 10 to 150,000 ohms per electrical square and (ii) the element further comprises at least two spaced-apart electrodes which can be connected to a source of electrical power to cause current to pass through the conductive layer.

8. A process for the preparation of an element according to any one of Claims 1 to 7 by applying a liquid composition comprising electrically conductive particles to a substrate and causing the composition to solidify, characterised by depositing the liquid composition onto the protruding fibres of a substrate which comprises:

(1) a support; and

(2) randomly distributed fibres having first portions which protrude from the support and second portions which are embedded in the support,

the support and the portions of the fibres embedded therein being relatively impervious to the liquid composition.

9. A process according to Claim 8 characterised in that the support is a flexible continuous film of hydrophobic polymeric material and the liquid composition is an aqueous dispersion of conductive particles.

10. A process according to Claim 8 or 9 characterised in that the liquid composition is substantially free of reinforcing fibres and is applied to the substrate by a printing process.

**Revendications**

1. Un élément électriquement conducteur comprenant un support et une couche électriquement conductrice contiguë qui comprend des fibres réparties au hazard et une matière solide électriquement conductrice adhérant aux fibres, caractérisé en ce que les fibres ont des premières parties qui font saillie hors du support et auxquelles adhère de la matière solide électriquement conductrice, formant ainsi une couche électriquement conductrice, et des secondes parties qui sont noyées dans le support et sont relativement exemptes de matière électriquement conductrice y adhérant.

2. Un élément selon la revendication 1, caractérisé en ce que: (i) le support est une pellicule continue souple de matière polymère et (ii) les fibres se présentent sous la forme d'une nappe fibreuse non tissée qui est en partie noyée dans le support.

3. Un élément selon la revendication 2, caractérisé en ce que la nappe fibreuse est composée de fibres de verre ayant un diamètre moyen de 3 à 5 microns et elle a une épaisseur comprise entre 0,07 et 0,6 mm.

4. Un élément selon la revendication 1, 2 ou 3, caractérisé en ce que: (i) le support est un lamifié comprenant une première couche continue d'une composition polymère feuillogène et une seconde couche d'une seconde composition polymère ayant un plus bas point de ramollissement que la première composition polymère et (ii) les fibres sont partiellement noyées dans la seconde couche.

5. Un élément selon l'une quelconque des revendications 1 à 4, caractérisé en ce que: (i) le support et les fibres sont composés de matière électriquement isolante, (ii) l'élément comprend, en outre, une couche électriquement isolante de matière polymère fixée à la surface des fibres éloignée du support, et (iii) l'axe de flexion neutre de l'élément passe par la couche conductrice.

6. Un élément selon l'une quelconque des revendications 1 à 5, caractérisé en ce que la couche conductrice comporte une multiplicité de vides qui y sont formés au hazard.

7. Un élément selon l'une quelconque des revendications 1 à 6, caractérisé en ce que: (i) la couche conductrice a une résistance en couche comprise entre 10 et 150.000 ohms par carré électrique et (ii) l'élément comprend, en outre, au moins deux électrodes espacées qui peuvent être connectées à une source de courant électrique pour provoquer le passage d'un courant à travers la couche conductrice.

8. Un procédé pour la préparation d'un élément selon l'une quelconque des revendications 1 à 7 en appliquant une composition liquide comprenant des particules électriquement conductrices sur un substrat et en provoquant la solidification de la composition, caractérisé en ce qu'il consiste à déposer une composition liquide comprenant des particules électriquement conductrices sur les fibres saillantes d'un substrat qui comporte:

un support; et

des fibres réparties au hazard ayant des premières parties qui font saillie hors du support et des secondes parties qui sont noyées dans le support;

le support et les parties des fibres qui y sont noyées étant relativement imperméables à la composition liquide.

9. Un procédé selon la revendication 8, caractérisé en ce que le support est une pellicule souple continue d'une matière polymère hydrophobe et la composition liquide est une dispersion aqueuse de particules conductrices.

10. Un procédé selon la revendication 8 ou 9, caractérisé en ce que la composition liquide est sensiblement exempte de fibres de renforcement et est appliquée sur le substrat par un procédé d'impression.

## Patentansprüche

1. Elektrisch leitfähiges Element, enthaltend einen Träger und eine angrenzende elektrisch leitfähige Schicht, die regellos verteilte Fasern und ein festes elektrisch leitfähiges Material anhaftend an den Fasern enthält, dadurch gekennzeichnet, daß die Fasern erste Anteile aufweisen, die aus dem Träger herausragen und die ein festes elektrisch leitfähiges Material daran haftend aufweisen, so daß sie eine elektrisch leitfähige Schicht bilden, und zweite Anteile, die in den Träger eingebettet sind und relativ frei von daran haftendem elektrisch leitfähigem Material sind.

2. Element nach Anspruch 1, dadurch gekennzeichnet, daß (i) der Träger eine flexible kontinuierliche Folie aus polymerem Material ist, und (ii) die Fasern in der Form einer nichtgewebten Fasermatte vorliegen, die teilweise in den Träger eingebettet ist.

3. Element nach Anspruch 2, dadurch gekennzeichnet, daß die Fasermatte aus Glasfasern mit einem durchschnittlichen Durchmesser von 3 bis 5 Mikron besteht und 0,07 bis 0,6 mm dick ist.

4. Element nach Anspruch 1, 2 oder 3, dadurch gekennzeichnet, daß (i) der Träger ein Schichtstoff ist, der eine erste kontinuierliche Schicht aus einer polymeren filmbildenden Zusammensetzung und eine zweite Schicht aus einer zweiten polymeren Zusammensetzung mit einem niedrigeren Erweichungspunkt als die erste polymere Zusammensetzung enthält, und (ii) die Fasern teilweise in die zweite Schicht eingebettet sind.

5. Element nach einem der Ansprüche 1 bis 4, dadurch gekennzeichnet, daß (i) der Träger und die Fasern aus elektrisch isolierendem Material bestehen, (ii) das Element darüber hinaus eine elektrisch isolierende Schicht aus polymerem Material enthält, das an der Oberfläche der Fasern entfernt von dem Träger haftet, und (iii) die neutrale Biegeachse des Elements durch die leitfähige Schicht verläuft.

6. Element nach einem der Ansprüche 1 bis 5, dadurch gekennzeichnet, daß die leitfähige Schicht zahlreiche regellos verteilte Leerstellen darin aufweist.

7. Element nach einem der Ansprüche 1 bis 6, dadurch gekennzeichnet, daß (i) die leitfähige Schicht einen Flächenwiderstand von 10 bis 150 000 Ohm pro elektrisches Quadrat aufweist und (ii) das Element darüber hinaus mindestens zwei räumlich entfernte Elektroden aufweist, die mit einer elektrischen Energiequelle verbunden werden können, um einen Stromfluß durch die leitfähige Schicht zu erzeugen.

8. Verfahren zur Herstellung eines Elements nach einem der Ansprüche 1 bis 7 durch Auftrag einer flüssigen Zusammensetzung, die elektrisch leitfähige Teilchen enthält, auf ein Substrat und Verfestigen der Zusammensetzung, dadurch gekennzeichnet, daß die flüssige Zusammensetzung auf die hervorstehenden Fasern eines Substrats abgeschieden wird, das

(1) einen Träger; und

(2) regellos verteilte Fasern, die erste Anteile, die aus dem Träger herausragen, und zweite Anteile, die in den Träger eingebettet sind, aufweisen, enthält,

wobei der Träger und die Anteile der Fasern, die darin eingebettet sind, für die flüssige Zusammensetzung relativ undurchlässig sind.

9. Verfahren nach Anspruch 8, dadurch gekennzeichnet, daß der Träger eine flexible, kontinuierliche Folie aus einem hydrophoben polymeren Material ist und die flüssige Zusammensetzung eine wässrige Dispersion leitfähiger Teilchen ist.

10. Verfahren nach Anspruch 8 oder 9, dadurch gekennzeichnet, daß die flüssige Zusammensetzung im wesentlichen frei von Verstärkungsfasern ist und auf das Substrat durch ein Druckverfahren aufgetragen wird.